Europäisches Patentamt

European Patent Office

Office européen des brevets

(19)

(11) Veröffentlichungsnummer : **0 204 862**
**B1**

(12)

# EUROPÄISCHE PATENTSCHRIFT

(45) Veröffentlichungstag der Patentschrift :
**15.03.89**

(51) Int. Cl.⁴ : **B 60 J 7/16, B 60 J 7/19**

(21) Anmeldenummer : **85107379.1**

(22) Anmeldetag : **14.06.85**

(54) Sonnendach für Fahrzeuge.

(43) Veröffentlichungstag der Anmeldung :
**17.12.86 Patentblatt 86/51**

(45) Bekanntmachung des Hinweises auf die Patenterteilung : **15.03.89 Patentblatt 89/11**

(84) Benannte Vertragsstaaten :
**AT BE CH DE FR GB IT LI LU NL SE**

(56) Entgegenhaltungen :
**BE--A-- 643 216**
**DE--A-- 2 645 288**
**DE--A-- 2 736 459**
**DE--A-- 3 228 699**
**DE--C-- 879 522**
**US--A-- 2 211 367**

(73) Patentinhaber : **Farmont Produktion GmbH & Co. KG
Schiess-Strasse 55
D-4000 Düsseldorf 11 (DE)**

(72) Erfinder : **Farmont, Rolf, Dr.
Hortensienstrasse 17
D-4000 Düsseldorf 30 (DE)**

(74) Vertreter : **Schumacher, Horst, Dr. Dipl.-Phys.
Frühlingstrasse 43 (Ecke Holunderweg)
D-4300 Essen 1 (DE)**

EP 0 204 862 B1

**Beschreibung**

Die Erfindung betrifft ein Sonnendach für Fahrzeuge gemäß dem Oberbegriff von Anspruch 1.

Bei derartigen Fahrzeugdächern, die z. B. aus den deutschen Offenlegungsschriften DE-A-26 45 288 oder DE-A-27 36 459 bekannt sind, bestehen die Ausstellvorrichtungen z. B. aus mehrteiligen Teleskopspindeltrieben, deren deckelseitiger Anlenkpunkt in Fahrzeuglängsrichtung verschieblich angeordnet sein muß. Derartige Ausstellvorrichtungen sind in der Herstellung aufwendig, da eine Veilzahl bewegter Teile an den gegenseitigen Berührungsflächen maßgenau ineinandergreifen müssen, da jegliches axiales Spiel zu Vibrationen und Klappergeräuschen bei aufgestellter Deckelplatte führen kann. Besonders nachteilig ist der nur geringe Variationsspielraum des Übersetzungsverhältnisses von Antriebs- und Ausstellweg. Insbesondere bei Handbetätigung eines Spindelantriebsrades erweist sich die notwendigerweise hohe Zahl an Umdrehungen, die zum ausreichend weiten Öffnen des Deckels erforderlich ist, als hinderlich, da vor allem der Fahrzeugfahrer hierdurch relativ lange seine Hand vom Steuer fortnehmen muß.

Bei einem gattungsgemäßen Sonnendach, wie es aus der DE-A-3 228 699 bekannt ist, wird außerordentlich viel Raum für die Ausstellvorrichtung benötigt. Darüber hinaus ist der Antriebsweg der Ausstellvorrichtung im Vergleich zum Schwenkweg der Deckelplatte relativ lang.

Davon ausgehend liegt der Erfindung die Aufgabe zugrunde, bei einem Sonnendach der eingangs genannten Art eine Ausstellvorrichtung mit frei wählbarem Übersetzungsverhältnis zwischen Schwenkweg und Antriebsweg, insbesondere für den Handantrieb, zu schaffen, wobei trotz einfachen Aufbaus ohne viele Einzelteile ein vergleichsweise weites Öffnen der Deckelplatte möglich ist und trotzdem eine spielfreie und klapperunanfällige Anordnung verwirklicht wird, insbesondere soll ein einfach zu handhabender und herzustellender Zugbandantrieb geschaffen werden ; weiterhin soll eine wirkungsvolle Sperre zum Festlegen der Deckelplatte in verschiedenen Schwenkpositionen geschaffen werden und die gesamte Ausstellvorrichtung soll auf möglichst kleinem Raum unterbringbar und zuverlässig gegen Witterungseinflüsse geschützt sein ; durch das Zugband sollen ausreichend hohe Kräfte übertragbar sein.

Als technische Lösung wird hierfür ein Sonnendach der eingangs genannten Art (DE-A-3228 699) mit den kennzeichnenden Merkmalen des Anspruchs 1 vorgeschlagen.

Das bei der Erfindung verwendete Zugband kann grundsätzlich per Hand oder mit einem Motor betätigt werden, wobei eine Antriebswelle mit dem Zugband entweder durch Formschluß, z. B. mittels Verzahnung, oder durch Kraftschluß, beispielsweise durch Reibungsbeanspruchung, antriebsverbunden ist, so daß das Zugband nach einer Umlenkung um mindestens 90° mit seinem freien d. h. von der Deckelplatte entfernten Ende die Antriebswelle wieder verläßt, oder daß es auf eine Wickelwelle aufwickelbar ist. In jedem Falle muß durch eine kraftschlüssig oder formschlüssig wirkende Sperre ein unter der Federwirkung selbsttätiges Öffnen der Deckelplatte verhindert werden.

Eine derartige Ausstellvorrichtung hat u. a. den Vorteil, daß sie nur aus wenigen Einzelteilen besteht und der deckelseitige und fahrzeugdachseitige Anlenkpunkt der Feder und des Zugbandes ortsfest und unverschieblich angeordnet sind. Das Übersetzungsverhältnis zwischen Schwenk- und Antriebsweg ist grundsätzlich beliebig varriierbar, insbesondere ist es möglich, mit einem verhältnismäßig kleinen Antriebsweg, von z. B. nur sehr wenigen Handkurbelumdrehungen, den Deckel relativ weit zu öffnen. Ein besonderer Vorzug besteht in der geringen Bauhöhe, die eine derartige Ausstellvorrichtung unterhalb des Deckels aufweisen kann, da eine Feder im Gegensatz zu einem teleskopierbaren Spindelantrieb im Schließzustand, d. h. bei völliger Kompression der Feder, außerordentlich flach sein kann.

Bei einer praktischen Ausführungsform der Erfindung (gemäß Anspruch 2) wird eine im ungespannten Zustand ihr maximales Längenmaß aufweisende Spiralfeder verwendet, deren Windungen bevorzugt konzentrisch ineinanderpassen, so daß bei völliger Federkompression alle Windungen ineinanderliegen und die Feder nicht mehr Platz als die Materialstärke des Federmaterials beansprucht. Vor allem bei Spiralfedern aus Rundmaterial kann aber auch eine zylindrische Spiralfeder verwendet werden. In jedem Fall ist zumindest das Zugband bevorzugt innerhalb der Spiralfeder längs des Federweges angeordnet (gemäß Anspruch 3), d. h. in demjenigen Bereich der Spiralfeder, der im komprimierten Zustand der Feder freibleibt.

Grundsätzlich ist es möglich, auch mehrere Federn und nur ein Zugband samt Antriebswelle vorzusehen, so daß eine echte Vierpunktlagerung des Deckels möglich wird. Ein besonders gefälliges Äußeres wird aber dann erreicht, wenn, gemäß einer anderen Weiterbildung der Erfindung (gemäß Anspruch 18), die Feder oberhalb und eine Antriebskurbel der Antriebswelle unterhalb einer vom Fahrzeugdach in die Dachöffnung hineinragende Lagerplatte angeordnet ist. Hierdurch verdeckt die Lagerplatte mit dem Kurbelmechanismus — von unten gesehen — die Feder völlig.

Eine ergonomisch günstige Handhabung der Antriebskurbel der Antriebswelle und zugleich günstige Anordnung des Zugbandes und der Feder ergeben sich, wenn gemäß einer anderen Weiterbildung der Erfindung (gemäß Anspruch 11) das Zugband am Fahrzeugdach um eine Rolle um etwa 90° umgelenkt ist und unmittelbar nachfolgend mit seinem freien, von an der Deckelplatte entfernten Ende von einer in ihrer Achse etwa rechtwinklig zur Ebene des Fahrzeugdaches sich erstreckenden Antriebswelle mit einer Kurbel vor- und zurückbewegbar ist. Hierbei wird also das Zugband in einer parallel zum Fahrzeugdach sich erstreckenden Ebene bewegt, insbesondere aufgewickelt, wobei die Antriebswelle etwa senkrecht zum Fahrzeugdach weist. Für einen solchen Fall eignen sich vor allem flexible Metalldrähte, insbesondere Stahldrähte, oder Kunststoffsehnen als Zugbänder, da diese trotz hoher Haltekraft sehr dünn und flexibel sein können und daher zum Aufwickeln besonders gut geeignet sind. — Grundsätzlich sind aber als biegsame Zugbänder auch elastische Zahnstangen aus Kunststoff oder Gliederketten oder ähnliche umlenkbare Zugbänder geeignet, da sie grundsätzlich auf Zug, nie aber auf Druck beansprucht werden.

Bei der Verwendung von Handkurbelantrieben mit einem parallel zum Fahrzeugdach sich erstreckenden Kurbelarm empfiehlt es sich (gemäß Anspruch 19), diesen um 180° um eine parallel zum Fahrzeugdach und rechtwinklig zum Kurbelarm sich erstreckende Achse umklappbar zu gestalten, so daß bei Nichtbenutzung die Kurbel in einem relativ kleinen formgeschützten Gehäuse untergebracht sein kann, aber gleichwohl im Betriebszustand ein ausreichend langer Hebelarm erzielt wird.

Gemäß einer anderen Weiterbildung der Erfindung (gemäß Anspruch 20) ist es bei der Verwendung von Antriebswellen mit Kurbeltrieb von besonderem Vorteil, wenn der Kurbelarm einen dem Kurbelgriff gegenüberliegenden, die Antriebswelle überragenden Arretierarm mit einem oder mehreren Rastzähnen an seinem freien Ende aufweist und eine Lagerplatte für die Antriebswelle kurbelseitig korrespondierende, im Kreis angeordnete Rastzähne zum lösbaren Verrasten mit dem Arretierarm aufweist. Bei dieser Lösung bilden bevorzugt (gemäß Anspruch 21) der Kurbel- und der Arretierarm einen zweiseitigen Kipphebel, bei dem der Kurbelarm gegen eine Gegenkraft zum Fahrzeugdach hin und gleichzeitig der Arretierarm vom Fahrzeugdach derart fortschwenkbar ist, daß dabei die im Ruhezustand im Eingriff stehenden Rastzähne ausrasten. Für den Ruhezustand reicht in der Regel ein derart großes Kurbelarmgewicht aus, daß dadurch ein größeres Drehmoment als durch den Arretierarm erzeugt wird ; es kann aber sicherheitshalber auch eine Feder vorgesehen sein, die zwischen dem Kurbelarm und der Lagerplatte im Abstoßungssinne wirkt, so daß die lagerplattenseitige Rastverzahnung im Ruhezustand stets im Eingriff bleibt. Bei einer derartigen Ausstellvorrichtung wird die Kurbel nur leicht gegen das Fahrzeugdach gedrückt ; dabei rasten die Rastzähne aus und die Kurbel kann mit oder gegen die Federspannung bis in die nächste gewünschte Öffnungsposition verdreht werden, in der die Rastzähne beim Loslassen der Kurbel wieder miteinander verrasten.

Wenn gemäß einer anderen Weiterbildung der Erfindung (Anspruch 13) das Zugband auf eine etwa senkrecht zur Zugrichtung sich erstreckende Wickelwelle aufwickelbar ist und die Wickelwelle mittels einer im Eingriff stehenden Verzahnung von der Antriebswelle antreibbar ist, wobei sich die Antriebswelle etwa in Zugrichtung des Zugbandes erstreckt, kann ein dünner Draht oder dgl. als Zugband verwendet werden. Bei einer praktischen Ausführungsform dieser Anordnung (gemäß Anspruch 15) besteht die Antriebswelle aus einem antreibbaren Innenzahnkranz und einer Welle mit einem mit dem Innenzahnkranz im Eingriff stehenden Außenzahnkranz und einem mit einem Außenzahnkranz der Wickelwelle im Eingriff stehenden Schneckengewinde. Hierdurch wird eine Übersetzung geschaffen, die mit wenigen Umdrehungen des Außenzahnkranzes ein völliges Öffnen oder Schließen des Sonnendaches gestattet, wobei durch die Kombination mit dem Schneckentrieb eine ausreichende Selbsthemmung (kraftschlüssige Sperre) gegen automatisches Öffnen der Deckelplatte gewährleistet ist.

Die Verwendung eines ausreichend dünnen und elastischen Zugbandes, welches auf kleinem Raum aufwickelbar und gleichwohl eine ausreichende Zugbelastbarkeit gewährleistet, wird gemäß einer anderen Weiterbildung der Erfindung (Anspruch 4) dadurch erreicht, daß das biegsame Zugband aus zwei im wesentlichen gleichen, zwischen der Deckelplatte und ihren Umlenkbereichen etwa parallel verlaufenden Teilzugbändern besteht. Dabei sind die Teilzugbänder (gemäß Anspruch 5) bevorzugt an ihren deckelplattenseitigen Enden miteinander verbunden, wobei (gemäß Anspruch 6) eine mit der Deckelplatte verbindbare Befestigungsplatte für das Zugband mit einer Führungs- und Umlenkrille für den Verbindungsbereich der Teilzugbänder versehen ist. Bevorzugt weist diese Befestigungsplatte (gemäß Anspruch 7) eine Durchbrechung als Bestandteil eines Bajonettverschlusses zur Verbindung mit der Deckelplatte auf.

Die antriebsseitigen Enden der Teilzugbänder können entweder (gemäß Anspruch 8) auf zwei Wickelwellen getrennt aufwickelbar sein — wobei die beiden Wickelwellen eine gemeinsame oder etwa zwei parallel verlaufende Achsen aufweisen können — oder (gemäß Anspruch 9) jeweils um etwa 90° umgelenkt und gemeinsam auf die Antriebswelle aufwickelbar sein. Im letzteren Fall gewährleisten (gemäß Anspruch 10) zwei axial beabstandete Wickelbereiche auf der Antriebswelle ein sauberes und getrenntes Aufwickeln der beiden Teilzugbänder auf kleinstem Raum.

Als wirkungsvolle Sperre ist gemäß einer anderen Weiterbildung der Erfindung (Anspruch 23) ein etwa U-förmiges, insbesondere topfförmiges, Bremselement geeignet, an dessen freien U-Schenkelenden sich das von der Deckelplatte entfernte Ende der Feder abstützt, wobei sich das Bremselement seinerseits mit der Innenfläche seines U-Bogens auf einer Stirnfläche der Antriebswelle abstützt und wobei die Innenfläche und die Stirnfläche korrespondierende Bremsflächen bilden. Hierdurch wird ein umso höherer Anpreßdruck der Bremsflächen erreicht, je weiter die Deckelplatte geschlossen ist. Mit anderen Worten wird die größte Bremswirkung, d. h. Selbsthemmung, dann erreicht, wenn die auf die Deckelplatte in Ausstellrichtung wirkende Federkraft am größten ist. Durch geeignete Oberflächen- und Größengestaltung der Bremsflächen kann die erreichbare Bremswirkung auf das durch die Feder vorgegebene erforderliche Maß abgestimmt werden.

Zum Schutz der Feder und etwaiger weiterer Bestandteile der Ausstellvorrichtung ist die Feder gemäß einer anderen Weiterbildung der Erfindung (gemäß Anspruch 24) von einem Faltenbalg umgeben und somit gegen jegliche Witterungseinflüsse geschützt, außerdem wird dadurch ein vorteilhaftes Aussehen der Ausstellvorrichtung erzielt.

Gemäß einer anderen Weiterbildung der Erfindung (Anspruch 14) wird eine wirkungsvolle Öffnungsbegrenzung der Deckelplatte dadurch erreicht, daß an einer (gemäß Anspruch 13) mit ihrer Achse sich parallel zur Fahrzeugdachebene erstreckenden Wickelwelle zum Aufwickeln des Zugbandes ein Anschlag und an dem Fahrzeugdach ein damit zusammenwirkender Gegenanschlag derart angeordnet sind, daß der Anschlag und der Gegenanschlag bei gegenseitigen Anliegen eine Öffnungsbegrenzung der Deckelplatte bilden. Hierzu kann ein Nocken oder Steg auf der Umfangs- oder mindestens auf einer der Stirnflächen der Wickelwelle(n) angeordnet sein ; der damit zusammenwirkende Gegenanschlag am Fahrzeugdach, insbesondere am Gehäuse der Ausstellvorrichtung kann auf seinen beiden Seiten wirksam werden. Seine Hauptaufgabe ist aber die obere Öffnungsbegrenzung der Deckelplatte. In dieser Stellung sollte das antriebsseitige Zugbandende mindestens noch 1/4 Umdrehung auf der Wickelwelle — besser noch 1/2 Umdrehung — aufgewickelt sein, und ein Abspringen des antriebsseitigen Zugbandendes an der Wickelwelle zu verhindern. Der wirksame Durchmesser der Wickelwelle muß dann ausreichend groß sein, damit bei einer maximalen Umdrehung der Wickelwelle von 360° die volle zum Dachöffnen erforderliche Zugbandlänge freigegeben bzw. eingerollt wird. Beim Schließen der Deckelplatte wird diese gegen übliche Dichtungen gepreßt, so daß sich eine Wegbegrenzung für diese Schwenkposition der Deckelplatte normalerweise erübrigt. Der Anschlag und der Gegenanschlag können aber so aufeinander abgestimmt sein, daß sie auch beim Schließen der Deckelplatte in der Schließposition wirksam werden ; dies kann vor allem bei der Verwendung von besonders weichen und daher hoch wirksamen Dichtungen der Deckelplatte von Vorteil sein, weil dadurch ein zu starkes Zusammendrücken der Dichtungen unterbunden wird.

Schneckengetriebe sind bei den für die erfindungsgemäße Ausstellvorrichtung bevorzugten Unter- bzw. Übersetzungsverhältnissen in der Regel nicht selbsthemmend. Es hat sich aber überraschenderweise gezeigt, daß dann eine sehr wirkungsvolle Selbsthemmung ·(kraftschlüssige Sperre) bei einer erfindungsgemäßen Ausstellvorrichtung erreicht wird, wenn, gemäß einer anderen Weiterbildung der Erfindung (gemäß Anspruch 16), die Antriebswelle direkt angetrieben wird und auf einem Teil ihrer Länge ein Schneckengewinde trägt, das mit einem Schneckenrad (Außenzahnkranz) der Wickelwelle im Eingriff steht, wobei das Untersetzungsverhältnis des Schneckengetriebes zwischen der Antriebswelle und der Wickelwelle zwischen 3 : 1 und 10 : 1, bevorzugt etwa 7 : 1, beträgt. Dadurch bleibt die Antriebswelle auch ohne eine besondere formschlüssige Sperre in ihrer jeweiligen Drehposition auch dann stehen, wenn sie nicht mehr angetrieben wird, insbesondere wenn die dazu verwendete Handkurbel losgelassen wird. Je nach Straßenverhältnissen und Fahrzeugart kann es aber von Nutzen sein, eine zusätzliche Formschlußsperre vorzusehen, wenn stärkere Erschütterungen und Vibrationen am Fahrzeugdach zu befürchten sind. Das Schneckengewinde ist (gemäß Anspruch 17) bevorzugt dreigängig ausgebildet, d. h. daß auf dem Umfang der Antriebswelle drei Schneckengänge gleichmäßig verteilt sind.

Eine für eine erfindungsgemäße Ausstellvorrichtung kumulativ oder alternativ verwendbare Formschlußsperre ist (gemäß Anspruch 22) dadurch gekennzeichnet, daß der Kurbelarm einer Kurbel der Antriebswelle in seiner Längsrichtung begrenzt verschiebbar ist und ein zwischen der Kurbel und dem Fahrzeugdach wirkendes Rastorgan derart angeordnet ist, daß durch das Längsverschieben der Kurbel das Rastorgan in verschiedenen Drehpositionen der Kurbel verriegelt respektive entriegelt wird. Die Betätigung des Rastorgans erfolgt bevorzugt durch leichten Zug am Kurbelarm nach außen, z. B. gegen den Druck einer Feder. Ein am Kurbelarm vorgesehenes Rastmittel kann durch solchen Zug aus dem entsprechenden Gegenrastmittel am Fahrzeugdach respektive dem Gehäuse der Ausstellvorrichtung, gezogen werden. Dann ist die Ausstellvorrichtung entriegelt und der Kurbelarm kann betätigt werden, wobei ein leichter Zug nach außen aufrechterhalten wird. Beim Loslassen des Kurbelarmes wird dieser z. B. durch die vorher gespannte Feder in die Ruheposition zurückgeschoben, wobei die korrespondierenden, das Rastorgan bildenden Rastmittel wieder einrasten. Zum Feststellen der Kurbel in verschiedenen Schwenkpositionen der Deckelplatte sind die gehäuseseitigen Gegenrastmittel z. B. auf einem Kreis um die Kurbelachse verteilt.

Die vorgenannten, erfindungsgemäß zu verwendenden Bauteile unterliegen in ihrer Größe, Formgestaltung, Materialauswahl und technischen Konzeption keinen besonderen Ausnahmebedingungen, so daß die in dem jeweiligen Anwendungsgebiet bekannten Auswahlkriterien uneingeschränkt Anwendung finden können.

Weitere Einzelheiten, Merkmale und Vorteile des Gegenstandes der Erfindung ergeben sich aus der nachfolgenden Beschreibung der zugehörigen Zeichnungen, in denen bevorzugte Ausführungsformen eines erfindungsgemäßen Sonnendaches, insbesondere einer erfindungsgemäßen Ausstellvorrichtung hierfür, dargestellt worden sind. In den Zeichnungen zeigen :

Fig. 1 ein Sonnendach in Ansicht von unten (Ansicht A gemäß Fig. 2) ;

Fig. 2 dasselbe Sonnendach im Schnitt entlang der Linie II-II gemäß Fig. 1 in vergrößerter Darstellung und mit ausgeklappter Kurbel ;

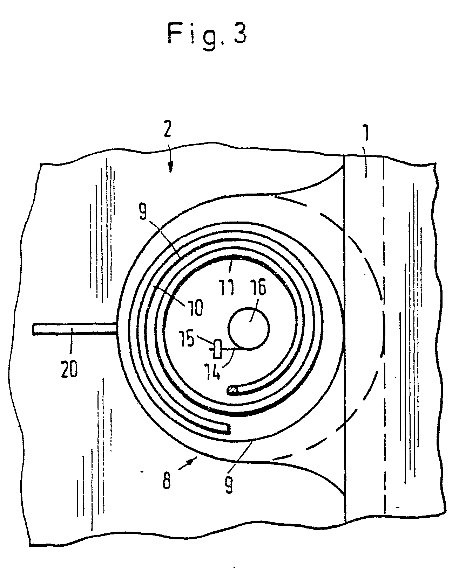

Fig. 3 dasselbe Fahrzeugdach im Schnitt entlang der Linie III-III gemäß Fig. 2 ;

Fig. 4 ein anderes Sonnendach im Vertikalschnittausschnittsweise ;

Fig. 5 dasselbe Sonnendach in Ansicht von oben (Ansicht D gemäß Fig. 4) ;

Fig. 6 eine Prinzipdarstellung des Antriebsmechanismus' bei der Ausstellvorrichtung gemäß Fig. 4 in perspektivischer Darstellung ;

Fig. 7 ein anderes Sonnendach im Vertikalschnittausschnittsweise — im Schnitt entlang der Linie VII-VII gemäß Fig. 8 ;

Fig. 8 dasselbe Sonnendach im Schnitt entlang der Linie VIII-VIII gemäß Fig. 7 ;

Fig. 9a das Bremselement der Ausstellvorrichtung gemäß Fig. 7 in Ansicht von oben (Ansicht E gemäß Fig. 9b) ;

Fig. 9b dasselbe Bremselement im Schnitt entlang der Linie IXb-IXb gemäß Fig. 9a) ;

Fig. 10a die Zubandbefestigungsplatte der Ausstellvorrichtung gemäß Fig. 7 im Vertikalschnitt (entlang der Linie Xa-Xa gemäß Fig. 10b) ;

Fig. 10b dieselbe Befestigungsplatte in Ansicht von oben (Ansicht F gemäß Fig. 10a) ;

Fig. 11 ein anderes Sonnendach mit einer vierten Ausstellvorrichtung im Vertikalschnitt ;

Fig. 12 eine Prinzipdarstellung des Antriebssystems der Ausstellvorrichtung gemäß Fig. 11 ;

Fig. 13 eine ähnliche Ausstellvorrichtung wie in Fig. 11 in Seitenansicht ;

Fig. 14 ein anderes Sonnendach mit einer fünften Ausstellvorrichtung im Vertikalschnitt sowie ;

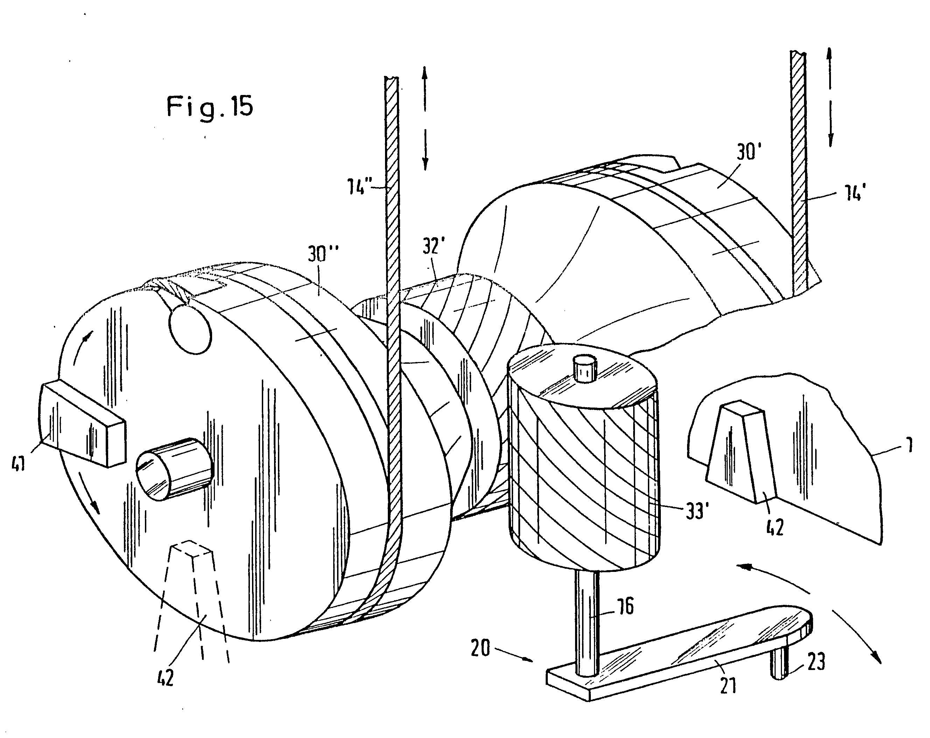

Fig. 15 eine ausschnittsweise Darstellung des Antriebssystems der Ausstellvorrichtung gemäß Fig. 14.

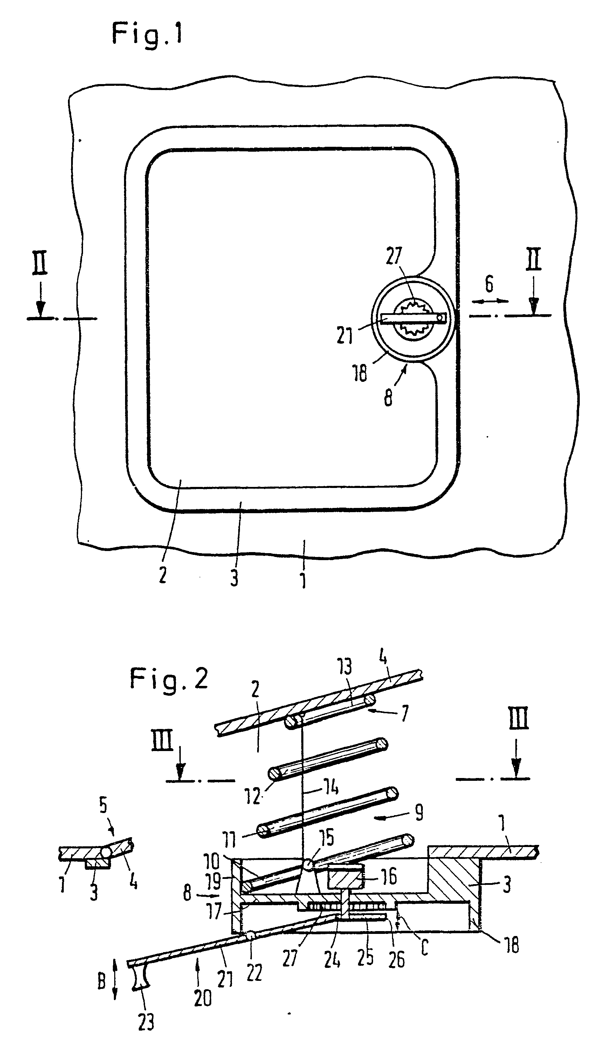

Gemäß Fig. 1 weist ein Fahrzeugdach 1 eine Dachöffnung 2 mit einem diese umgebenden Rahmen 3 auf, sie ist mit einer Deckelplatte 4 (Fig. 2) verschließbar. Hierzu weist die Deckelplatte 4 an ihrer Vorderkante 5 Scharniere mit quer zur Fahrzeuglängsrichtung 6 verlaufenden Achsen zum Schwenken und Befestigen der Deckelplatte 4 auf. Zwischen der Deckelplatte 4 und dem Fahrzeugdach 1 ist im Bereich 7 der Deckelhinterkante eine Ausstellvorrichtung 8 angeordnet. Diese besteht aus einer Spiralfeder 9, die im ungespannten Zustand ihr maximales Längenmaß aufweist, und deren Windungen 10 bis 13 konzentrisch ineinanderpassen. In maximaler Öffnungsstellung der Deckelplatte sollte die Feder aber bereits leicht vorgespannt sein, um Klappern zu vermeiden.

Ein Zugband 14, etwa ein hoch flexibles Stahlseil oder eine Nylonsehne, ist im Bereich 13 der Deckelplatte 4 an dieser befestigt (abgestützt) und um eine fahrzeugdachseitige Rolle 15 um 90° umgelenkt und auf einer Antriebswelle 16 geführt, auf deren Rillen es aufgewickelt werden kann. Das Band 14 ist derart innerhalb der Spiralfedermitte längs des Fahrzeugweges angeordnet, daß bei völligem Deckelschließen das Zugband 14 und die Rolle 15 sich noch innerhalb der konzentrisch ineinanderliegenden Windungen 10 bis 13 angeordnet sind. Bei dieser Anordnung kann das Material der Spiralfeder 9 anstelle eines kreisförmigen, auch einen rechteckigen Querschnitt aufweisen. Die Antriebswelle 16 erstreckt sich etwa rechtwinklig zur Ebene des Fahrzeugdaches 1 und durchdringt eine einstückig mit dem Rahmen 3 gebildete oder an diesen angeschraubte oder sonstwie befestigte Lagerplatte 17, die in die Dachöffnung 2 etwa als Kreissegment hineinragt. Die Lagerplatte 17 ist auf beiden Seiten mit einer Umrandung 18, 19 umgeben, innerhalb der die Spiralfeder 9, das Zugband 14, die Rolle 15 und die Wickeltrommel der Antriebswelle 16 untergebracht sind. Die Umrandung 18 bildet demgegenüber eine Vertiefung zur Aufnahme einer Kurbel 20, deren Kurbelarm 21 mittels eines Gelenkes 22 umgeklappt und dadurch auch für die Ruhestellung erheblich verkürzt werden kann, wobei der Kurbelgriff 23 innerhalb der Umrandung 18 verschwindet. Die Kurbel ist mit der Antriebswelle 16 drehfest verbunden, weist aber quer dazu ein Gelenk 24 auf, um das eine leichte Schwenkbewegung in Richtung der Pfeile B, C möglich ist. Der Kurbelarm 21 weist einen dem Kurbelgriff gegenüberliegenden, die Antriebswelle 16 überragenden Arretierarm 25 auf, dessen eine oder mehrere Rastzähne 26 im Ruhezustand der Kurbel im Eingriff mit korrespondierenden Rastzähnen 27 stehen, die im Kreis auf der Lagerplatte 17 angeordnet sind.

In der Fig. 2 ist der Kurbelarm 21, dessen Eigengewicht bei Nichtberühren den Arretierarm 25 im Eingriff mit den Rastzähnen 27 hält, so weit angehoben, daß die Rastzähne 26, 27 nicht mehr im Eingriff stehen und die Kurbel 20 daher durch drehen betätigt werden kann, um den Deckel noch weiter zu öffnen oder zu schließen. Hierdurch ist eine wirkungsvolle formschlüssige Sperre gegeben, die ein Festlegen des Zugbandes in verschiedenen Schwenkpositionen des Dekkels gestattet.

Eine weitere, in der Zeichnung nicht dargestellte, Möglichkeit der Zugbandbetätigung besteht (gemäß Anspruch 12) darin, das freie d.h. von der Deckelplatte entfernte Zugbandende an einem von einer Gewindespindel vor- und zurückbewegbaren Schlitten zu befestigen ; eine Sperre ist dabei wegen der bei Gewindespindelantrieben bekannten Selbsthemmung auf natürliche Weise verwirklicht.

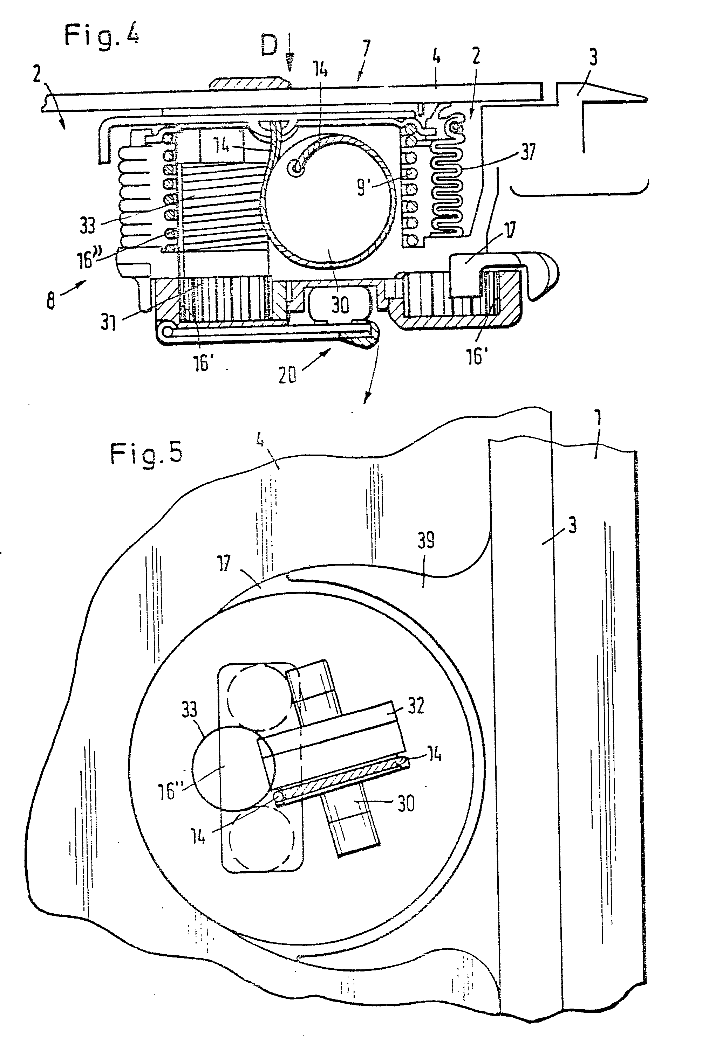

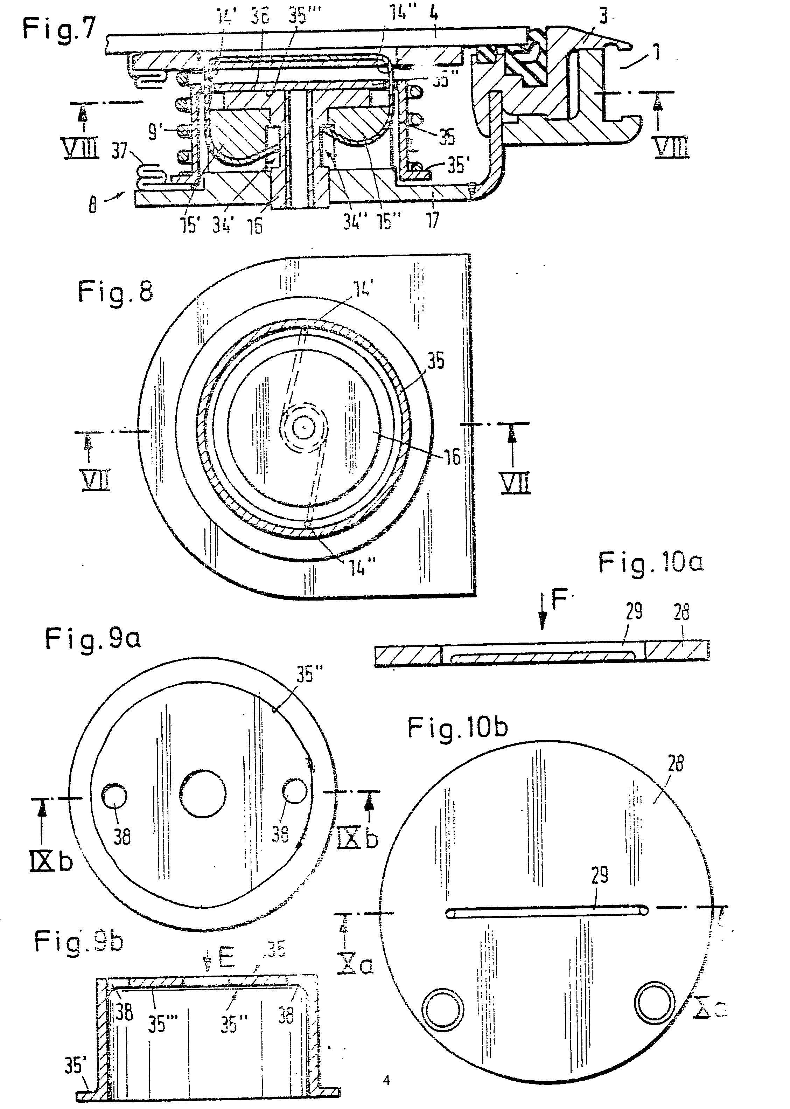

In Fig. 4 ist eine andere Variante einer Ausstellvorrichtung 8 dargestellt. An der Lagerplatte 17 ist eine in Zugrichtung des Zugbandes 14 sich erstreckende Welle 16" gelagert. Diese Welle weist an ihrem die Lagerplatte 17 nach unten durchdringenden Ende einen Außenzahnkranz 31 auf, der mit einem von einer ausklappbaren Kurbel 20 antreibbaren Innenzahnkranz 16' im Eingriff steht (siehe Fig. 6). Das die Lagerplatte 17 nach oben durchdringende Ende der Welle 16″ ist mit einem Schneckengewinde 33 ausgestattet, welches in einer aus Figur 6 ersichtlichen Weise mit einem Außenzahnkranz 32 (Schneckenrad) einer senkrecht zur Zugrichtung des Zugbandes 14 drehbar gelagerten Wickelwelle 30 im Eingriff steht. Auf diese Wickelwelle ist das Zugband 14 von seinem freien Ende aufwickelbar. Die einerseits an der Lagerplatte 17 und andererseits von unten gegen die Deckelplatte 4 abgestützte zylindrische Spiralfeder 9′ ist von einem Faltenbalg 37 umgeben.

Bei einer anderen Ausführungsform der Ausstellvorrichtung 8 gemäß Fig. 7 bis Fig. 10b werden als Zugband zwei Teilzugbänder 14′, 14″ verwendet, welche mittels einer mit der Deckelplatte 4 verschraubbaren Befestigungsplatte 28 an der Deckelplatte angreifen können. Hierzu wird bevorzugt ein dünnes Metallband oder dgl. verwendet, dessen beiden freien Enden auf die vertikale, in der Lagerplatte 17 drehbar gelagerte Antriebswelle 16 aufgewickelt werden ; so entstehen die beiden deckelseitig miteinander verbundenen Teilzugbänder 14′ und 14″, deren Verbindungsbereich durch eine Führungs- und Umlenkrille 29 in der Befestigungsplatte 28 geführt ist. Die Antriebswelle 16 ist oberhalb der Lagerplatte 17 von zwei axial beabstandeten Umlenkflächen 15′ und 15″ für die Teilzugbänder 14′ bzw. 14″ umgeben ; sie führen die freien Zugbandenden auf die axial beabstandeten Wickelbereiche 34′ bzw. 34″ auf der Antriebswelle 16.

Als kraftschlüssige Sperre (Reibungsschluß) gegen ungewolltes Öffnen der Deckelplatte 4 unter der Wirkung der Federkraft der Spiralfeder 9′ dient ein topfförmiges Bremselement 35, dessen Topfrand (freie Schenkelenden 35′) nach außen aufgebogen ist und als untere Abstützung der Spiralfeder 9′ dient. Dieses topfförmige Bremselement erstreckt sich mit seinen Seitenwänden parallel zur Zylinderfläche innerhalb der Spiralfeder 9′. Der als U-Bogen 35″ ausgebildete Topfboden weist Bohrungen 38 für den Durchtritt der Teilzugbänder 14′ bzw. 14″ auf. Seine Innenfläche 35‴ ist als scheibenförmige Bremsfläche ausgebildet. Hiermit korrespondiert die verbreiterte Standfläche 36 der Antriebswelle 16. Unter der Druckwirkung der Feder 9 wird das Bremselement 35 umso stärker auf die Stirnfläche 36 gepreßt, je weiter die Deckelplatte 4 sich ihrer Schließstellung nähert. Dadurch wird die Hemmung der Antriebswelle 16 gegen selbsttätiges Drehen im Öffnungssinne der Deckelplatte verhindert.

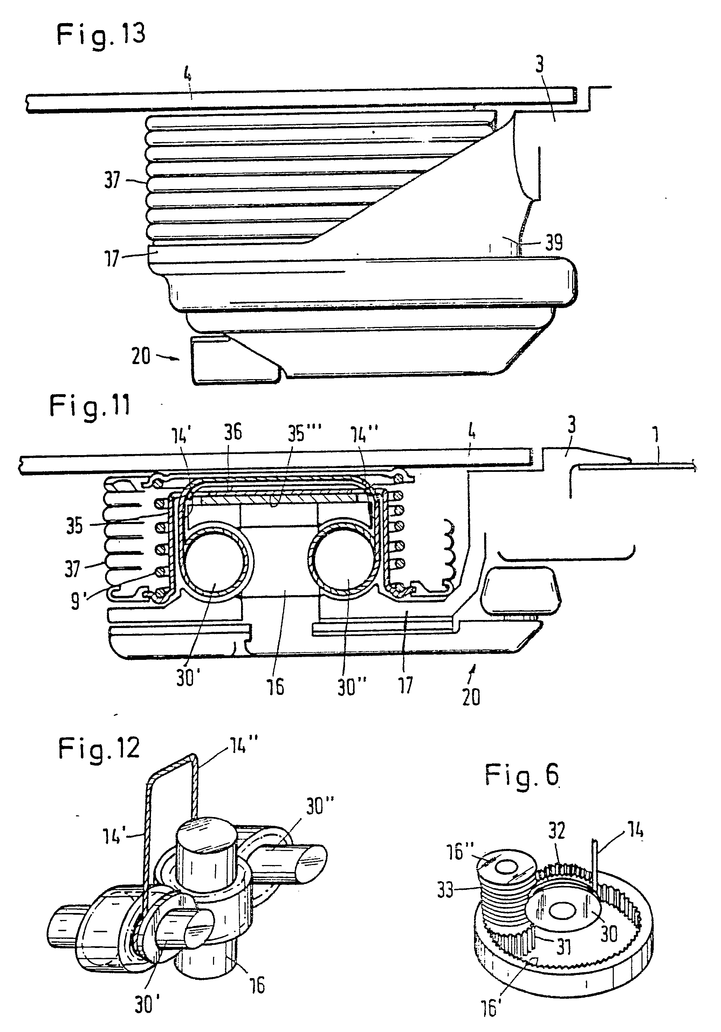

Mit einem ähnlich ausgebildeten und wirkenden Bremselement 35 ist auch die vierte Ausstellvorrichtung gemäß Fig. 11 und 12 ausgestattet. Auch hier weist das Zugband zwei Teilzugbänder 14′, 14″ auf, die zwischen der Deckelplatte 4 und ihren Umlenkbereichen etwa parallel verlaufen. Im Gegensatz zu der dritten Ausführungsform, nämlich gemäß Fig. 7, werden aber nun die freien Enden der Teilzugbänder auf senkrecht zu deren Zugrichtung sich erstreckende Wickelwellen 30′, 30″ aufgewickelt. Als Antrieb der beiden Wickelwellen dient wieder eine sich etwa in Zugrichtung erstreckende, mit einer Kurbel 20 antreibbare Antriebswelle 16 mit einer auf die Wickelwellen 30′, 30″ im Drehsinne wirkenden Schraubenverzahnung, welche an sich bekannt und daher der Übersichtlichkeit halber in den Figuren nicht detailliert dargestellt ist.

Zur Lagerung der Wickelwellen und der Antriebswelle bei den Ausführungsformen gemäß Fig. 7 und Fig. 11 dienen miteinander verschraub- oder verklebbare Lagerschalen, von denen die untere bevorzugt einstückig mit der Lagerplatte 17 gebildet ist.

Wie sich auf Fig. 13 ergibt kann die Lagerplatte 17 durch daran etwa rechtwinklig angeformte Aussteifungsflächen 39 mit günstiger Kraftverteilung an den Rahmen 3 angeschlossen werden (siehe auch Fig. 5).

Insgesamt können die meisten der erforderlichen Bauteile der Ausstellvorrichtung aus Kunststoff im Spritzgußverfahren hergestellt werden.

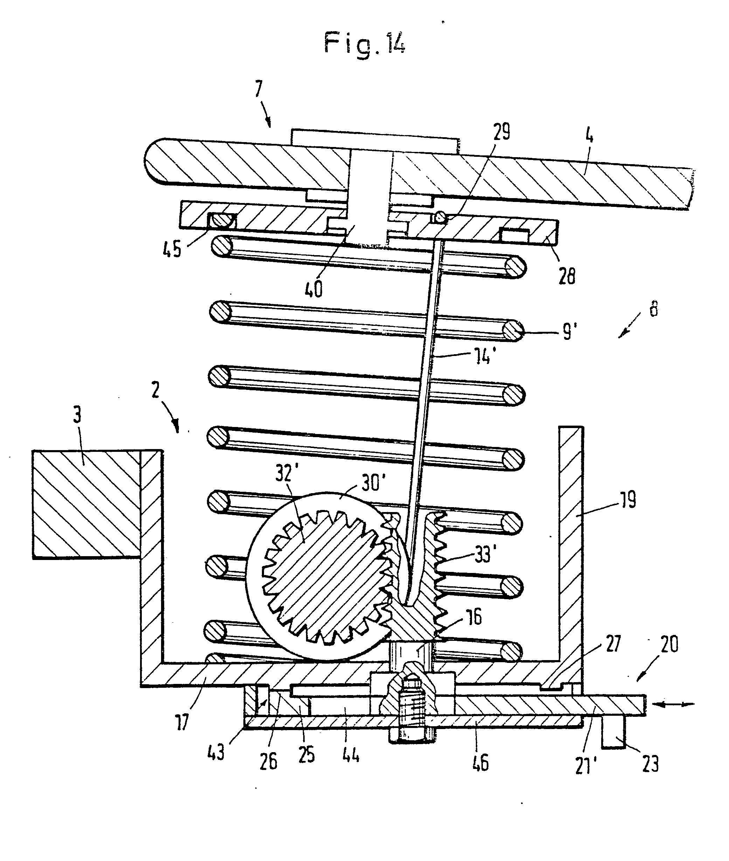

Das Sonnendach gemäß Fig. 14 befindet sich in jeder z. T. geöffneten Schwenkposition der Deckelplatte 4. Die Feder 9′ stützt sich in einer umlaufenden Kreisnut 45 einer Befestigungsplatte 28 deckelplattenseitig ab. Die Befestigungsplatte 28 weist eine mittige Durchbrechung 40 zur Aufnahme eines Bajonettverschlusses auf, mit dem eine druck- und zugfeste Verbindung zur Deckelplatte 4 herstellbar ist. Das aus zwei Teilzugbändern 14′ und 14″ bestehende Zugband ist in der Befestigungsplatte 28 außermittig durch zwei in der Zeichnung nicht dargestellte Bohrungen geführt, die an der Oberseite durch eine Umlenkrille 29 für das Zugband verbunden sind.

Ein dreigängiges Schneckengewinde 33′ bildet den oberen Teil einer vertikalen Antriebswelle 16 und steht im Eingriff mit einem um eine horizontale Achse drehbaren Schneckenrad 32′. Das Untersetzungsverhältnis dieses Schneckengetriebes beträgt 7 : 1. Beidseitig des Schneckenrades 32′ sind im Durchmesser größere Wickelwellen 30′ und 30″ mit spiralig verlaufender Führungsrille für die Teilzugbänder 14′ und 14″ angeordnet. Sie tragen auf ihren äußeren Stirnseiten Anschläge 41, die mit Gegenanschlägen 42 des Fahrzeugdaches 1 derart zusammenwirken, daß die beiden Wickelwellen sich in einem Winkelbereich von etwa 330° drehen können. Der Durchmesser ihrer Führungsrille ist daher so bemessen, daß bei einer 330°-Umdrehung die maximale Öffnungsposition der Deckelplatte 4 erreicht wird.

Die als Stahlseile ausgebildeten Teilzugbänder 14′ und 14″ sind in der Schließposition 1 1/2 Umdrehungen auf die Wickelwellen 30′ bzw. 30″ spiralig aufgewickelt. Bei völlig geöffneter Deckelplatte sind die Teilzugbänder daher noch etwa 1/2 Umdrehung aufgewickelt ; hierdurch wird ein Ausreißen an ihren befestigungspunkten vermieden.

Durch die 7 : 1 -Untersetzung des Schneckengetriebes wird überraschenderweise eine Selbsthemmung erreicht, so daß die Kurbel 20 der Antriebswelle 16 in jeder Drehposition losgelassen werden kann, ohne daß die Feder 9′ zu einem weiteren Öffnen der Deckelplatte 4 führt. Die sich aus Fig. 14 ergebende zusätzliche formschlüssige Sperre ist daher nur als zusätzliche Sicherung gegen ungewolltes Öffnen der Deckelplatte 4 bei starken Erschütterungen und Vibrationen gedacht. Der Kurbelarm 21' ist längsverschieblich in einem Deckel 46 angeordnet und weist ein Langloch 44 auf, so daß in jeder Verschiebeposition eine formschlüssige Verbindung zur Antriebswelle 16 besteht. Der dem Kurbelarm 21' in bezug auf die Antriebswelle 16 gegenüberliegende und mit ihm einstückig gebildete Arretierarm 25 ist mit einem Rastzahn 26 ausgestattet, der mit korrespondierenden Rastzähnen 27 an der Lagerplatte 17 ein Rastorgan 43 bildet, welches in verschiedenen Drehpositionen des Kurbelarmes 21 ein formschlüssiges Sichern des Kurbelarmes gegen Drehbewegungen gestattet. Hierzu sind die Rastzähne 27 gleichmäßig auf einem Umfang unterhalb der Lagerplatte 17 verteilt. Durch einen Zug am Kurbelgriff 23 nach außen wird das Rastorgan 43 entsichert und die Kurbel kann betätigt werden. Dies kann gegen den Zug einer in den Zeichnungen nicht dargestellten Feder geschehen, welche den Kurbelarm 21' beim Loslassen des Kurbelgriffes 23 in seine Rastposition zurückzieht.

Bezugszeichenliste

1  Fahrzeugdach
2  Dachöffnung
3  Rahmen
4  Deckelplatte
5  Vorderkante
6  Fahrzeuglängsrichtung
7  Bereich
8  Ausstellvorrichtung
9  Spiralfeder
9'  Spiralfeder
10  Windung
11  Windung
12  Windung
13  Windung
14  Zugband
14'  Teilzugband
14"  Teilzugband
15  Rolle
15'  Umlenkfläche
15"  Umlenkfläche
16  Antriebswelle
16'  Innenzahnkranz
17  Lagerplatte
18  Umrandung
19  Umrandung
20  Kurbel
21  Kurbelarm
21'  Kurbelarm
22  Gelenk
23  Kurbelgriff
24  Gelenk
25  Arretierarm
26  Rastzahn
27  Rastzahn
28  Befestigungsplatte

29  Umlenkrille
30  Wickelwelle
30'  Wickelwelle
30"  Wickelwelle
31  Außenzahnkranz
32  Außenzahnkranz (Schneckenrad)
32'  Außenzahnkranz (Schneckenrad)
33  Schneckengewinde
33'  Schneckengewinde
34'  Wickelbereich
34"  Wickelbereich
35  Bremselement
35'  Schenkelenden
35"  U-Bogen
35'''  Innenbereich
36  Stirnfläche
37  Faltenbalg
38  Bohrungen
39  Aussteifungsflächen
40  Durchbrechung
41  Anschlag
42  Gegenanschlag
43  Rastorgan
A  Ansicht
B  Pfeil
C  Pfeil
D  Ansicht
E  Ansicht
F  Ansicht
44  Langloch
45  Nut
46  Deckel

Patentansprüche

1. Sonnendach für Fahrzeuge, bei dem eine Dachöffnung (2) im Fahrzeugdach (1) durch eine Deckelplatte (4) verschließbar ist, welche eine Vorder- und eine Hinterkante aufweist und im Bereich ihrer Vorderkante (5) um eine quer zur Fahrzeuglängsrichtung (6) verlaufende Achse schwenkbar am Fahrzeugdach (1) befestigt ist und mit ihrer Hinterkante aus der Dachebene nach oben ausschwenkbar ist, wobei zwischen der Deckelplatte (4) im Bereich (7) ihrer Hinterkante und dem Fahrzeugdach (1) eine Ausstellvorrichtung (8) angeordnet ist, wobei die Ausstellvorrichtung (8) aus :
a) einer in Ausstellrichtung zwischen dem Bereich (7) der Hinterkante der Deckelplatte und dem Fahrzeugdach (1) wirkenden, auf einer bezüglich des Fahrzeugdaches (1) ortsfest angeordneten Lagerplatte (17) abgestützten Feder (9, 9'),
b) einem gegen die Federwirkung betätigbaren, im Bereich (7) der Hinterkante der Deckelplatte (4) an dieser befestigten, um mindestens 90° umgelenkten, biegsamen Zugband (14 ; 14', 14") sowie
c) einer drehbaren Antriebswelle (16 : 16', 16") zum Vor- und Zurückbewegen des von der Deckelplatte (4) entfernten Endes des Zugbandes besteht, wobei das Zugband (14, 14', 14'') in vorgebbaren Schwenkpositionen der Deckelplatte (4) durch eine form- oder kraftschlüssig wirkende Sperre z. B. durch Verzahnung bzw. Reibungsbeanspruchung, festlegbar ist, dadurch gekennzeichnet, daß die Antriebswelle (16 ; 16', 16'') an der Lagerplatte (17) derart drehbar gelagert angeordnet ist daß das Zugband (14, 14', 14'') innerhalb der Ausstellvorrichtung (8) umgelenkt und auf der Antriebswelle (16) bzw. mindestens einer Wickelwelle (30, 30', 30'') der Sperre oder von dieser auf- oder abgewickelt und angetrieben wird bzw. von der Antriebswelle zwangsverschoben wird.

2. Sonnendach nach Anspruch 1, dadurch gekennzeichnet, daß die Feder eine im ungespannten Zustand ein maximales Längenmaß aufweisende Spiralfeder (9) ist, deren Windungen (10 bis 13) konzentrisch ineinanderpassen.

3. Sonnendach nach Anspruch 1 oder 2, dadurch gekennzeichnet, daß zumindest das Zugband (14, 14', 14'') innerhalb einer Spiralfeder (9, 9') längs des Federweges angeordnet ist.

4. Sonnendach nach einem der Ansprüche 1 bis 3, dadurch gekennzeichnet, daß das biegsame Zugband (14, 14', 14'') aus zwei im wesentlichen gleichen, zwischen der Deckelplatte (4) und ihren Umlenkbereichen etwa parallel verlaufenden Teilzugbändern (14', 14'') besteht.

5. Sonnendach nach Anspruch 4, dadurch gekennzeichnet, daß die Teilzugbänder (14', 14'') an ihren deckelplattenseitigen Enden miteinander verbunden sind.

6. Sonnendach nach Anspruch 5, gekennzeichnet durch eine mit der Deckelplatte (4) verbindbare Befestigungsplatte (28) für das Zugband mit einer Führungs- und Umlenkrille (29) für den Verbindungsbereich der Teilzugbänder (14', 14'').

7. Sonnendach nach Anspruch 6, dadurch gekennzeichnet, daß die Befestigungsplatte (28) eine Durchbrechung (40) als Bestandteil eines Bajonettverschlusses zur Verbindung mit der Deckelplatte (4) aufweist.

8. Sonnendach nach einem der Ansprüche 4 bis 7, dadurch gekennzeichnet, daß die antriebsseitigen Enden der Teilzugbänder (14, 14') auf zwei Wickelwellen (30', 30'') getrennt aufwickelbar sind.

9. Sonnendach nach einem der Ansprüche 4 bis 7, dadurch gekennzeichnet, daß die antriebsseitigen Enden der Teilzugbänder (14', 14'') jeweils um 90° umgelenkt und gemeinsam auf die Antriebswelle (16) aufwickelbar sind.

10. Sonnendach nach Anspruch 9, gekennzeichnet durch zwei axial beabstandete Wickelbereiche (34', 34'') auf der Antriebswelle (16).

11. Sonnendach nach einem der Ansprüche 1 bis 10, dadurch gekennzeichnet, daß das Zugband (14 bzw. 14', 14'') mittels einer am Fahrzeugdach (1) angeordneten Rolle (15) um etwa 90° umgelenkt ist und unmittelbar nachfolgend mit seinem von der Deckelplatte (4) entfernten Ende von einer in ihre Achse etwa rechtwinklig zur Ebene des Fahrzeugdaches sich erstreckenden Antriebswelle (16) mit einer Kurbel (20) vor- und zurückbewegbar ist.

12. Sonnendach nach einem der Ansprüche 1 bis 10, dadurch gekennzeichnet, daß die drehbare Antriebswelle eine Gewindespindel ist, auf der ein Schlitten, an dem das von der Deckelplatte (4) entfernte Zugbandende befestigt ist, vor- und zurückbewegbar ist.

13. Sonnendach nach einem der Ansprüche 1 bis 10, dadurch gekennzeichnet, daß das Zugband (14 bzw. 14', 14'') auf eine etwa senkrecht zur Zugrichtung sich erstreckende Wickelwelle (30 bwz. 30', 30'') aufwickelbar ist und daß die Wickelwelle (30, 30', 30'') mit einer im Eingriff stehenden Verzahnung von der Antriebswelle (16) antreibbar ist, wobei sich die Antriebswelle (16) etwa in Zugrichtung erstreckt.

14. Sonnendach nach Anspruch 13, dadurch gekennzeichnet, daß an der Wickelwelle (30, 30', 30'') ein Anschlag (41) und an dem Fahrzeugdach (1) ein damit zusammenwirkender Gegenanschlag (42) derart angeordnet sind, daß der Anschlag (41) und der Gegenanschlag (42) bei gegenseitigem Anliegen eine Öffnungsbegrenzung der Deckelplatte (4) bilden.

15. Sonnendach nach Anspruch 13 oder 14, dadurch gekennzeichnet, daß die Antriebswelle (16) aus einem antreibbaren Innenzahnkranz (16') und einer Welle (16'') mit einem mit dem Innenzahnkranz (16') im Eingriff stehenden Außenzahnkranz (31) und einem mit dem Außenzahnkranz (32) der Wickelwelle (30, 30', 30'') im Eingriff stehenden Schneckengewinde (33) besteht.

16. Sonnendach nach Anspruch 13 oder 14, dadurch gekennzeichnet, daß die Antriebswelle (16) direkt angetrieben wird und auf einem Teil ihrer Länge ein Schneckengewinde (33') trägt, das mit einem Schneckenrad (Außenzahnkranz 32') der Wickelwelle (30, 30', 30'') im Eingriff steht, wobei das Untersetzungsverhältnis des Schneckengetriebes zwischen der Antriebswelle und der Wickelwelle zwischen 3 : 1 und 10 : 1 beträgt.

17. Sonnendach nach Anspruch 16, dadurch gekennzeichnet, daß das Schneckengewinde (33') dreigängig ist.

18. Sonnendach nach einem der Ansprüche 1 bis 17, dadurch gekennzeichnet, daß die Lagerplatte (17) vom Fahrzeugdach (1) in die Öffnung (2) hineinragt und auf der der Feder (9, 9') gegenüberliegenden Seite der Lagerplatte (17) eine Kurbel (20) der Antriebswelle angeordnet ist.

19. Sonnendach nach einem der Ansprüche 1 bis 8, dadurch gekennzeichnet, daß der Kurbelarm (21) einer Kurbel (20) der Antriebswelle um etwa 180° um eine parallel zum Fahrzeugdach (1) und rechtwinklig zum Kurbelarm (21) sich erstreckende Achse (Gelenk 22) umklappbar ist.

20. Sonnendach nach einem der Ansprüche 1 bis 19, dadurch gekennzeichnet, daß der Kurbelarm (21) einer Kurbel (20) der Antriebswelle einen dem Kurbelgriff (23) gegenüberliegenden, die Antriebswelle überragenden Arretierarm (25) mit einem oder mehreren Rastzähnen (26) an seinem freien Ende aufweist und eine Lagerplatte (17) für die Antriebswelle kurbelseitig korrespondierende, im Kreis angeordnete Rastzähne (27) lösbaren Verrasten mit dem Arretierarm (25) aufweist.

21. Sonnendach nach Anspruch 20, dadurch gekennzeichnet, daß der Kurbelarm (21) und der Arretierarm (25) einen zweiseitigen Kipphebel bilden, bei dem der Kurbelarm (21) gegen eine Gegenkraft zum Fahrzeugdach (1) hin und gleichzeitig der Arretierarm vom Fahrzeugdach (1) derart fortschwenkbar ist, daß dabei die im Ruhestand im Eingriff stehenden Zähne (26 und 27) ausrasten.

22. Sonnendach nach einem der Ansprüche 1 bis 21, dadurch gekennzeichnet, daß der Kurbelarm (21') einer Kurbel (20) der Antriebswelle in seiner Längsrichtung begrenzt verschiebbar ist und ein zwischen der Kurbel (20) und dem Fahrzeugdach (1) wirkendes Rastorgan (43) derart angeordnet ist, daß durch das Längsverschieben der Kurbel (20) das Rastorgan (43) in verschiedenen Drehpositionen der Kurbel (20) verriegelt respektive entriegelt wird.

23. Sonnendach nach einem der Ansprüche 21 bis 22, dadurch gekennzeichnet, daß als Sperre ein etwa U-förmiges, insbesondere topfförmiges, Bremselement (35) dient, an dessen freien U-Schenkelenden (35') sich das von der Deckelplatte (4) entfernte Ende der Feder (9, 9') abstützt und welches mit der Innenfläche (35''') des U-Bogens (35'') auf einer Stirnfläche (36) der Antriebswelle (16) abgestützt ist, wobei die Innenfläche (35''') und die Stirnfläche (36) korrespondierende Bremsflächen bilden.

24. Sonnendach nach einem der Ansprüche 1 bis 23, dadurch gekennzeichnet, daß die Feder (9, 9') von einem Faltenbalg (37) umgeben ist.

**Claims**

1. A sun roof for vehicles, with which a roof opening (2) in the vehicle roof (1) can be closed by a cover plate (4) which has a front edge and a rear edge and which in the area of its front edge (5) is secured to the vehicule roof (1) so as to be pivotable about an axis extending at right angles to the longitudinal direction of the vehicle (6) and with its rear edge can be rotated upwards out of the plane of the roof, a display device (8) being arranged between the cover plate (4), in the area (7) of its rear edge, and the vehicle roof (1), the display device (8) consisting of :

a) a spring (9, 9') supported on a base plate (17) which is arranged stationarily in relation to the vehicle roof (1), this spring acting in the display direction, between the area (7) of the rear edge of the cover plate and the vehicle roof (1).

b) a flexible tie (14 : 14', 14'') which acts against the spring action, attached to the cover plate (4) in the area (7) of the rear edge of the cover plate (4) and turns through at least 90°, and

c) a rotatable drive shaft (16 : 16', 16'') for forward and backward movement of the tie end which is at a distance from the cover plate (4), the tie (14, 14', 14'') being securable in predeterminable pivot positions of the cover plate (4) by a stop acting in a form-locking or force-locking manner e. g. by toothing and/or frictional load, characterized in that the drive shaft (16 : 16', 16'') is arranged rotatably mounted on the base plate (17) in such that the tie (14, 14', 14'') is turned within the display device (8) and is wound onto or off the drive shaft (16) or at least one winding shaft (30, 30', 30'') of the stop and is driven thereby, or is forcibly moved by the drive shaft.

2. A sun roof according to Claim 1, characterized in that the spring is a spiral spring (9) having in the untensioned state a maximum long measure, the coils (10 to 13) of this spiral spring fitting concentrically into each other.

3. A sun roof according to Claim 1 or 2, characterized in that at least the tie (14, 14', 14'') is arranged within a spiral spring (9, 9') along the spring deflection.

4. A sun roof according to one of the Claims 1 to 3, characterized in that the flexible tie (14, 14', 14'') consists of two partial ties (14', 14'') which are essentially identical and extend approximately parallel between the cover plate (4) and their turning areas.

5. A sun roof according to Claim 4 characterized in that the partial ties (14', 14'') are connected to each other at their ends on the cover plate side.

6. A sun roof according to Claim 5, characterized by a fastening plate (28) for the tie, this fastening plate being connectable to the cover plate (4) and having a guiding and turning groove (29) for the connecting area of the partial ties (14', 14'').

7. A sun roof according to Claim 6, characterized in that the fastening plate (28) has an opening (40) as a component of a bayonet catch for connecting with the cover plate (4).

8. A sun roof according to one of the Claims 4 to 7, characterized in that the ends, on the drive side, of the partial ties (14, 14') can be separately wound up onto two winding shafts (30', 30'').

9. A sun roof according to one of the Claims 4 to 7, characterized in that the ends, on the drive side, of the partial ties (14', 14'') are in each case turned through 90° and can be wound up together onto the drive shaft (16).

10. A sun roof according to Claim 9, characterized by two axially distanced winding areas (34', 34'') on the drive shaft (16).

11. A sun roof according to one of the Claims 1 to 10, characterized in that the tie (14 and/or 14', 14'') is turned through approximately 90° by means of a roller (15) arranged on the vehicle roof (1) and immediately subsequently can, with its end remote from the cover plate (4), be moved forward and backward by a drive shaft (16) with a crank (20), this drive shaft extending in its axis approximately at right angles to the plane of the vehicle roof.

12. A sun roof according to one of the Claims 1 to 10, characterized in that the rotatable drive shaft is a threaded spindle, on which a slide, whereon the tie end remote from the cover plate (4), can be moved forward and backward.

13. A sun roof according to one of the Claims 1 to 10, characterized in that the tie (14 and/or 14', 14") can be wound up onto a winding shaft (30 and/or 30', 30") extending approximately vertically to the direction of motion and in that the winding shaft (30, 30', 30") can be driven by an engaging toothing of the drive shaft (16), the drive shaft (16) extending approximately in the direction of motion.

14. A sun roof according to Claim 13, characterized in that a stop (41) is arranged on the winding shaft (30, 30', 30") and a counter stop (42) working together with the stop is arranged on the vehicle roof (1), these being arranged in such a way that the stop (41) and the counter stop (42) form a limitation to opening of the cover plate (4) when they are adjacent each other.

15. A sun roof according to Claim 13 or 14, characterized in that the drive shaft (16) consists of a driveable inner gear (16'), and a shaft (16") with an outer gear (31) engaging the inner gear (16'), and a worm thread (33) engaging the outer gear (32) of the winding shaft (30, 30', 30").

16. A sun roof according to Claim 13 or 14, characterized in that the drive shaft (16) is directly driven and bears a worm thread (33') on a part of its length, the worm thread engaging with a worm wheel (outer gear 32') of the winding shaft (30, 30', 30"), the gear ratio of the worm gearing between the drive shaft and the winding shaft amounting to between 3 : 1 and 10 : 1.

17. A sun roof according to Claim 16, characterized in that the worm gearing (33') is triple-threaded.

18. A sun roof according to one of the Claims 1 to 17, characterized in that the base plate (17) projects from the vehicle roof (1) into the opening (2) and a crank (20) of the drive shaft is arranged on the side of the base plate (17) which is opposite the spring (9, 9').

19. A sun roof according to one of the Claims 1 to 8, characterized in that the crank arm (21) of a crank (20) of the drive shaft can be turned through approximately 180° about an axis (hinged joint 22) extending parallel to the vehicle roof (1) and at right angles to the crank arm (21).

20. A sun roof according to one of the Claims 1 to 19, characterized in that the crank arm (21) of a crank (20) of the drive shaft has a stopping arm (25) which is opposite the crank handle (23), overlaps the drive shaft and has one or a plurality of notches (26) at its free end ; and a base plate (17) for the drive shaft has notches (27) which correspond on the crank side and which are arranged in a circle, these notches for detachably engaging with the stop arm (25).

21. A sun roof according to Claim 20, characterized in that the crank arm (21) and the stopping arm (25) form a double-sided rocking lever with which the crank arm (21) is, against a counterforce, rotatable towards the vehicle roof (1) and at the same time the stopping arm is rotatable away from the vehicle roof (1), in such a way that in the process the teeth (26 and 27) which are engaged in the at rest state, disengage.

22. A sun roof according to one of the Claims 1 to 21, characterized in that the crank arm (21') of a crank (20) of the drive shaft can be moved to a limited extent in its longitudinal direction and an engaging member (43) working between the crank (20) and the vehicle roof (1) is arranged in such a way that, by means of the longitudinal movement of the crank (20), the engaging member (43) is locked and unlocked in various rotational positions of the crank (20).

23. A sun roof according to one of the Claims 21 to 22, characterized in that an approximately U-shaped, in particular pot-shaped, braking element (35) serves as a stop, on the free U-arm ends (35') of which braking element is supported the end of the spring (9, 9') which is at a distance from the cover plate (4), and which braking element is supported, by the inner surface (35''') of the U-bend (35''), on an end plane (36) of the drive shaft (16), the inner surface (35''') and the end plane (36) forming corresponding braking surfaces.

24. A sun roof according to one of the Claims 1 to 23, characterized in that the spring (9, 9') is surrounded by a bellows (37).

## Revendications

1. Toit pare-soleil pour véhicules, dans lequel une ouverture de toit (2) située dans le toit de véhicule (1) peut être obturée par un volet de recouvrement (4) présentant une arête avant et une arête arrière et fixée sur le toit de véhicule dans la zone de son arête avant (5), pivotant autour d'un axe s'étendant transversalement à la direction longitudinale du véhicule (6) et pouvant être basculée à l'extérieur du toit, vers le haut, avec son arête arrière, un dispositif d'ouverture (8) étant disposé entre le volet de recouvrement (4) dans la zone (7) de son arête arrière et le toit de véhicule (1), le dispositif d'ouverture (8) se composant :

a) d'un ressort (9, 9') appuyé sur une plaque de montage (17) fixe par rapport au toit de véhicule (1), ressort agissant dans le sens de l'ouverture, entre la zone (7) de l'arête arrière du volet de recouvrement et le toit de véhicule (1),

b) d'un cordon de traction (14 ; 14', 14") flexible, actionnable contre l'effet du ressort, fixé sur le volet de recouvrement (4), dans la zone (7) de l'arête arrière de celui-ci, dévié d'au moins 90° ainsi que

c) d'un arbre d'entraînement tournant (16 ; 16', 16") pour déplacer en avant et en arrière l'extrémité du cordon de traction éloignée du volet de recouvrement (4), le cordon de traction (14 ; 14', 14") étant susceptible d'être fixé des positions du volet de recouvrement (4) prédéterminables, au moyen d'un blocage à complémentarité de forme et interpénétration de forces, par exemple par denture, ou sollicitation au frottement, caractérisé en ce que l'arbre d'entraînement (16 ; 16', 16") est disposé tournant sur la plaque de montage (17), de façon que le cordon de traction (14 ; 14', 14") soit dévié à l'intérieur du dispositif d'ouverture (8) et enroulé ou déroulé, et entraîné, sur l'arbre d'entraînement (16) ou au moins un arbre d'enroulement (30 ; 30', 30") du blocage ou bien par cet arbre d'entraînement, ou bien déplacé par force par l'arbre d'entraînement.

2. Toit pare-soleil selon la revendication 1, caractérisé en ce que le ressort est un ressort hélicoïdal (9) présentant une longueur maximale à l'état détendu, dont les spires (10 à 13) s'ajustent les unes dans les autres de manière concentrique.

3. Toit pare-soleil selon la revendication 1 ou 2, caractérisé en ce qu'au moins le cordon de traction (14, 14', 14") est disposé à l'intérieur d'un ressort hélicoïdal (9, 9'), le long de la course du ressort.

4. Toit pare-soleil selon l'une des revendications 1 à 3, caractérisé en ce que le cordon de traction flexible (14, 14', 14") se compose de deux cordons de traction partiels (14', 14") principalement identiques, s'étendant approximativement parallèlement entre le volet de recouvrement (4) et ses zones de renvoi.

5. Toit pare-soleil selon la revendication 4, caractérisé en ce que les cordons de traction partiels (14', 14") sont reliés ensemble à leurs extrémités situées du côté du volet de recouvrement.

6. Toit pare-soleil selon la revendication 5, caractérisé par une plaque de fixation (28) susceptible d'être reliée au volet de recouvrement (4), pour le cordon de traction, avec une gorge de guidage et de renvoi (29) pour la zone de liaison des cordons de traction partiels (14', 14").

7. Toit pare-soleil selon la revendication 6, caractérisé en ce que la plaque de fixation (28) présente un passage (40) faisant partie d'un raccordement à baïonnette, pour la liaison au volet de recouvrement (4).

8. Toit pare-soleil selon l'une des revendications 4 à 7, caractérisé en ce que les extrémités du côté entraînement des cordons de traction partiels (14', 14") sont susceptibles d'être enroulées séparément sur deux arbres d'enroulement (30', 30").

9. Toit pare-soleil selon l'une des revendications 4 à 7, caractérisé en ce que les extrémités du côté entraînement des rubans de traction partiels (14', 14") sont chaque fois déviées de 90° et sont enroulables ensemble sur l'arbre d'entraînement (16).

10. Toit pare-soleil selon la revendication 9, caractérisé par deux zones d'enroulement écartées axialement (34', 34") sur l'arbre d'entraînement (16).

11. Toit pare-soleil selon l'une des revendications 1 à 10, caractérisé en ce que le cordon de traction (14 ou 14', 14") est dévié d'environ 90° au moyen d'un galet (15) disposé sur le toit de véhicule (1) et immédiatement ensuite, déplacé en avant et en arrière avec son extrémité éloignée du volet de recouvrement (4), par un arbre d'entraînement (16) avec une manivelle (20), arbre dont l'axe s'étend approximativement perpendiculairement au plan du toit de véhicule.

12. Toit pare-soleil selon l'une des revendications 1 à 10, caractérisé en ce que l'arbre d'entraînement tournant est une broche filetée, sur laquelle un coulisseau est mobile en avant et en arrière, coulisseau sur lequel est fixée l'extrémité du cordon de traction éloignée du volet de recouvrement (4).

13. Toit pare-soleil selon l'une des revendications 1 à 10, caractérisé en ce que le cordon de traction (14 ou 14', 14") est susceptible d'être enroulé sur un arbre d'enroulement (30 ou 30', 30") s'étendant approximativement perpendiculairement à la direction de traction et en ce que l'arbre d'enroulement (30, 30', 30") est susceptible d'être entraîné par une denture de l'arbre d'entraînement (16) se trouvant en prise, l'arbre d'entraînement (16) s'étendant approximativement dans la direction de traction.

14. Toit pare-soleil selon la revendication 13, caractérisé en ce qu'une butée (41) est disposée sur l'arbre d'enroulement (30, 30', 30") et qu'une contre-butée (42) coopérant avec elle est disposée sur le toit de véhicule (1), en ce que la butée (41) et la contre-butée (42) forment une limitation de l'ouverture du volet de recouvrement (4) lorsqu'elles appuient l'une sur l'autre.

15. Toit pare-soleil selon la revendication 13 ou 14, caractérisé en ce que l'arbre d'entraînement (16) se compose d'une couronne dentée intérieure (16') actionnable et d'un arbre (16") avec une couronne dentée extérieure (31) en prise sur la couronne dentée intérieure (16') et d'un filetage hélicoïdal (33) en prise sur la couronne dentée extérieure (32) de l'arbre d'enroulement (30, 30', 30").

16. Toit pare-soleil selon la revendication 13 ou 14, caractérisé en ce que l'arbre d'entraînement (16) est directement entraîné et porte un filetage hélicoïdal (33') sur une partie de sa longueur, filetage venant en prise sur une roue hélicoïdale (couronne à denture extérieure 32') de l'arbre d'enroulement (30, 30', 30"), le rapport de transmission de l'entraînement à vis sans fin entre l'arbre d'entraînement et l'arbre d'enroulement étant compris entre 3 : 1 et 10 : 1.

17. Toit pare-soleil selon la revendication 16, caractérisé en ce que le filetage de vis (33') est à trois filets.

18. Toit pare-soleil selon l'une des revendications 1 à 17, caractérisé en ce que la plaque de montage (17) fait saillie dans l'ouverture (2) en venant du toit de véhicule (1) et qu'une manivelle (20) de l'arbre d'entraînement est disposée sur le côté de la plaque de montage (17) opposé au ressort (9, 9').

19. Toit pare-soleil selon l'une des revendications 1 à 8, caractérisé en ce que le bras de manivelle (21) d'une manivelle (20) de l'arbre d'entraînement est rabattable d'environ 180° autour d'un axe (articulation 22) s'étendant parallèlement au toit de véhicule (1) et à angle droit par rapport au bras de manivelle (21).

20. Toit pare-soleil selon l'une des revendications 1 à 19, caractérisé en ce que le bras de manivelle (21) d'une manivelle (20) de l'arbre d'entraînement présente un bras de blocage (25) opposé à la poignée de manivelle (23), faisant saillie au-dessus de l'arbre d'entraînement, avec une ou plusieurs dents d'encliquetage (26) à son extrémité libre et une plaque de montage (17) pour des dents d'encliquetage (27) correspondant au côté de la manivelle de l'arbre d'entraînement, dents disposées en cercle pour produire un encliquetage pouvant être supprimé avec le bras de blocage (25).

21. Toit pare-soleil selon la revendication 20, caractérisé en ce que le bras de manivelle (21) et le bras de blocage (25) forment un levier basculant des deux côtés, dans lequel le bras de manivelle (21) peut être basculé en avant contre une force antagoniste par rapport au toit de véhicule (1) et le bras de blocage étant simultanément basculé par rapport au toit de véhicule (1) de façon que les dents placées en prise (26 et 27) à l'état de repos se dégagent.

22. Toit pare-soleil selon l'une des revendications 1 à 21, caractérisé en ce que le bras de levier (21') d'une manivelle (20) de l'arbre d'entraînement est mobile de manière limitée dans sa direction longitudinale et qu'un élément d'encliquetage (43) agissant entre la manivelle (20) et le toit de véhicule (1) est disposé de telle sorte, que du fait du déplacement longitudinal de la manivelle (20), l'élément d'encliquetage (43) soit verrouillé ou déverrouillé dans des positions de rotations différentes de la manivelle (20).

23. Toit pare-soleil selon l'une des revendications 21 à 22, caractérisé en ce qu'un élément de frein (35) approximativement en forme de U, en particulier en forme de pot, sert de blocage, élément sur les extrémités libres des ailes de U (35') duquel s'appuie l'extrémité du ressort (9, 9') éloignée du volet de recouvrement (4) et qui est appuyé avec la surface intérieure (35''') du coude en U (35'') sur une surface frontale (36) de l'arbre d'entraînement (16), la surface intérieure (35''') et la surface frontale (36) formant des surfaces de freinage correspondantes.

24. Toit pare-soleil selon l'une des revendications 1 à 23, caractérisé en ce que le ressort (9, 9') est entouré d'un soufflet (37).

Fig.1

II

27

6

21

18

8

II

2    3    1

Fig.2

13    4

2

III

7

12

14

9

5

11

1

1    3    4

10    15

19    16

8

17    27    24    25    26    C    18

B

23    20    21    22

1

# Fig. 3

Fig. 4

Fig. 5

EP 0 204 862 B1

Fig.7

Fig.8

Fig.9a

Fig.9b

Fig.10a

Fig.10b

EP 0 204 862 B1

Fig.13

Fig.11

Fig.12

Fig.6

# Fig.14

Fig.15